(19) Europäisches Patentamt
European Patent Office
Office européen des brevets

(11) Veröffentlichungsnummer: **0 014 365**
**A1**

(12) # EUROPÄISCHE PATENTANMELDUNG

(21) Anmeldenummer: 80100270.0

(22) Anmeldetag: 21.01.80

(51) Int. Cl.³: C 08 G 18/02
C 08 G 18/79, C 07 C 119/045
C 08 G 73/06

(30) Priorität: 01.02.79 US 8450

(43) Veröffentlichungstag der Anmeldung:
20.08.80 Patentblatt 80/17

(84) Benannte Vertragsstaaten:
BE DE FR GB IT NL

(71) Anmelder: Mobay Chemical Corporation
Penn Lincoln Parkway West
Pittsburgh, Pennsylvania 15205(US)

(72) Erfinder: Heiss, Herbert L.
R.D. 1 Box 71
New Martinsville West Virginia 26155(US)

(74) Vertreter: Müller, Heinz-Gerd, Dipl.-Ing. et al,
c/o Bayer AG Zentralbereich Patente Marken und Lizenzen
D-5090 Leverkusen 1, Bayerwerk(DE)

(54) **Verfahren zur Herstellung von linearen heterocyclischen Nylon-1-polymerisaten, ihre Verwendung als verkappte Diisocyanate für die Herstellung von Polyurethan-Kunststoffen und ein Verfahren zur Herstellung von im wesentlichen reinen cycloaliphatischen Diisocyanat-Stereoisomeren.**

(57) Die Erfindung betrifft ein neues Verfahren zur Herstellung von linearen heterocyclischen Nylon-1-polymerisaten, das dadurch gekennzeichnet ist, daß man alkylsubstituierte 1,3 Diisocyanat-cyclohexane, deren Isocyanatgruppen axial oder äquatorial stehen, zusammen mit Katalysatoren aus der aus Bleikatalysatoren, tertiären Aminen, Alkalimetall- hydroxiden und Alkalimetallalkoholaten bestehenden Gruppe auf eine Temperatur von etwa 50° bis etwa 150°C erhitzt, die Verwendung des erhaltenen linearen Nylon-1-polymerisats als verkappte Diisocyanate bei der Herstellung von Polyurethan-Kunststoffen und die Abtrennung von im wesentlichen reinem cycloaliphatischem Diisocyanat in Form der reaktionsfähigen (cis-Form) Stereoisomeren von cycloaliphatischem Diisocyanat in Form der nicht-reaktionsfähigen (trans-Form) Stereoisomeren nach einem Verfahren, das dadurch gekennzeichnet ist, daß man ein Diisocyanatgemisch, das sowohl alkylsubstituiertes 1,3-Diisocyanat-cyclohexan in Form der cis-Stereoisomeren als auch in Form der trans- Stereoisomeren enthält, in Gegenwart der vorstehend genannten Katalysatoren erhitzt, die linearen heterocyclischen Nylon-1 polymerisate vom Reaktionsgemisch abtrennt und die linearen Nylon-1-polymerisate unter Destillationsbedingungen zersetzt, hierdurch ein Destillat bildet und das Destillat, das ein aus Stereoisomeren in der cis-Form bestehendes, im wesentlichen reines Monomeres enthält, gewinnt.

EP 0 014 365 A1

# Verfahren zur Herstellung von linearen heterocyclischen Nylon-1-polymerisaten, ihre Verwendung als verkappte Diisocyanate für die Herstellung von Polyurethan-Kunststoffen und ein Verfahren zur Herstellung von im wesentlichen reinen cycloaliphatischen Diisocyanat-Stereoisomeren.

Die Erfindung betrifft ein neues Verfahren zur Herstellung von linearen heterocyclischen Nylon-1-polymerisaten aus alkylsubstituierten 1,3-Diisocyanat-cyclohexanen, die Verwendung dieser linearen Nylon-1-polymerisate als verkappte Diisocyanate bei der Herstellung von Polyurethan-Kunststoffen sowie ein neues Verfahren zur Abtrennung von im wesentlichen reinen cycloaliphatischen Diisocyanat-cis-stereoisomeren von cycloaliphatischen Diisocyanat-trans-stereoisomeren.

Es ist bekannt, daß organische Isocyanate zu hochmolekularen linearen organischen Polymerisaten polymerisiert werden können. Beispielsweise beschreibt die US-PS 2 965 614 ein Verfahren, bei dem ein Isocyanat, in dem die Isocyanatgruppe (oder Isocyanatgruppen) an ein wenigstens zwei Wasserstoffatome tragendes Kohlenstoffatom gebunden ist, unter wasserfreien Bedingungen mit einem anionischen Alkalimetallkatalysator bei einer Temperatur unter etwa -20°C in einem Lösungsmittel für das Isocyanat und den Katalysator behandelt wird. Die Produkte werden als lineare Polymerisate beschrieben.

In ähnlicher Weise werden gemäß der US-PS 3 163 624 Trimethylendiisocyanat oder alkyl- und/oder arylsubstituierte Trimethylendiisocyanate mit einem anionischen Alkalimetallkatalysator bei einer Temperatur von etwa -20° bis -100°C oder niedriger behandelt, wobei ein lineares Polymerisat, das sechsgliedrige Ringe enthält, gebildet wird.

In der US-PS 3 048 566 wird ein hochmolekulares synthetisches lineares Polymerisat eines organischen Polyisocyanats mit wenigstens zwei vicinalen Isocyanatgruppen beschrieben. Das Polymerisat ist durch eine wiederkehrende fünfgliedrige Ringstruktureinheit gekennzeichnet, in der der Stickstoff einer der Isocyanatgruppen an das Kohlenstoffatom einer benachbarten Isocyanatgruppe gebunden ist. Die Produkte werden durch Polymerisation des Isocyanats unter wasserfreien Bedingungen unter etwa 75°C hergestellt. Die Polymerisate können durch thermische Crackung depolymerisiert werden. Das Beispiel III dieser Patentschrift beschreibt die Polymerisation von Cyclohexan-1,2-diisocyanat. Ein ähnliches Polymerisationsverfahren wird in der US-PS 3 450 676 beschrieben.

Schließlich beschreiben Corfield und Crawshaw in Chemical Communications 4 (1966 ) 85-86 die Polymerisation von cis-1,3-Cyclohexandiisocyanat. Das angewendete Verfahren besteht aus der Behandlung des Isocyanats mit Natriumcyanid in einer Dimethylformamidlösung bei einer Temperatur von -40° bis -60°C. Die hierbei gebildete Polymereinheit wird durch die folgende Formel dargestellt:

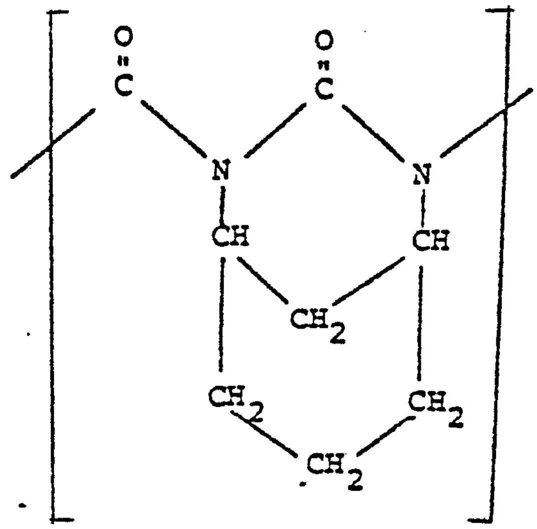

Gegenstand der Erfindung ist die Herstellung von linearen heterocyclischen Nylon-1-polymerisaten durch Polymerisation von cycloaliphatischen Diisocyanaten in Gegenwart von Polymerisationskatalysatoren nach einem neuen Verfahren, das dadurch gekennzeichnet ist, daß man

a) alkylsubstituierte 1,3-Diisocyanat-cyclohexane, deren Isocyanatgruppen beide axial oder äquatorial angeordnet sind, gegebenenfalls in Mischung mit anderen Stereoisomeren als cycloaliphatische Diisocyanate verwendet und
b) Verbindungen aus der aus organischen Salzen von zweiwertigem Blei, tertiären Aminen, Alkalihydroxiden und Alkalialkoholaten bestehenden Gruppe als Katalysatoren verwendet.

Die Erfindung ist ferner auf die Verwendung der Produkte dieses Verfahrens als verkappte Diisocyanate gerichtet, die als Ausgangsmaterialien für die Herstellung von Polyurethan-Kunststoffen nach dem Isocyanat-Polyadditionsprozeß verwendet werden.

Die Erfindung umfaßt schließlich die Abtrennung von im wesentlichen reinen alkylsubstituierten 1,3-Diisocyanat-cyclohexan-cis-stereoisomeren von alkylsubstituierten 1,3-Diisocyanat-cyclohexan-trans-stereoisomeren nach einem Verfahren, das dadurch gekennzeichnet ist, daß man

a) ein Gemisch, das beide Stereoisomeren enthält, in Gegenwart von Verbindungen aus der aus organischen Salzen von zweiwertigem Blei, tertiären Aminen, Alkalimetallhydroxiden und Alkalialkoholaten bestehenden Gruppe auf eine Temperatur von etwa 50° bis 150°C erhitzt,

b) das durch diese Reaktion gebildete lineare cyclische Nylon-1-polymerisat vom Reaktionsgemisch isoliert und

c) das Polymerisat unter Destillationsbedingungen zersetzt und hierdurch ein Destillat bildet, das ein im wesentlichen reines Monomeres enthält, das aus alkylsubstituiertem 1,3-Diisocyanat-cyclohexan in Form der cis-Stereoisomeren besteht.

Die Produkte des Verfahrens gemäß der Erfindung enthalten regelmäßig wiederkehrende bicyclische Struktureinheiten der allgemeinen Formel

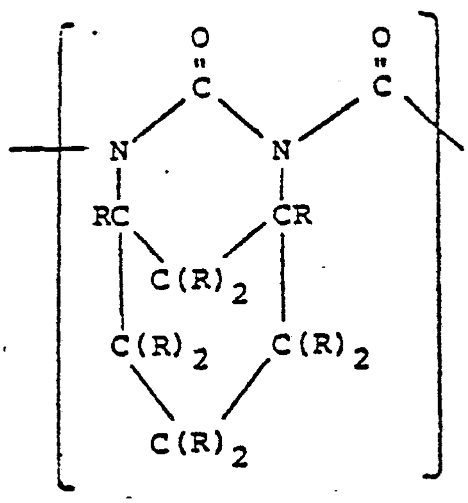

worin R Wasserstoff oder ein aliphatischer Kohlenwasserstoffrest mit 1 bis 4 C-Atomen sein kann, wobei wenigstens einer der Reste R ein aliphatischer Kohlenwasserstoffrest mit 1 bis 4 C-Atomen ist und diese Polymerisate 2 bis 100 dieser wiederkehrenden Struktureinheiten enthalten. Im allgemeinen haben die Polymerisate ein Zahlenmittelmolekulargewicht von etwa 500 bis 35.000.

Die als Ausgangsmaterialien beim Verfahren gemäß der Erfindung verwendeten alkylsubstituierten Diisocyanat-cyclohexane haben die allgemeine Formel

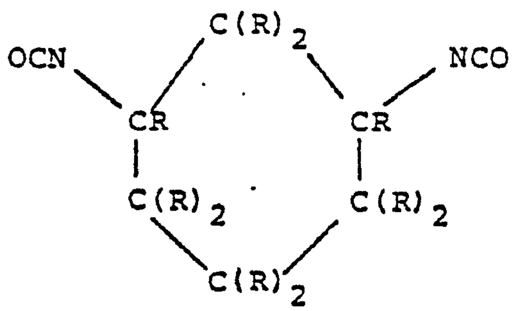

in der R Wasserstoff oder ein aliphatischer Kohlenwasserstoffrest mit 1 bis 4 C-Atomen und wenigstens einer dieser Reste R ein aliphatischer Kohlenwasserstoffrest mit 1 bis 4 C-Atomen ist. Besonders bevorzugt als Ausgangsmaterialien werden Diisocyanate, die einen Methylsubstituenten insbesondere in o-Stellung zu wenigstens einer Isocyanatgruppe enthalten. Spezielle Beispiele geeigneter cycloaliphatischer Diisocyanate sind 1-Methyl-2,4-diisocyanat-cyclohexan, 1-Methyl-2,6-diisocyanat-cyclohexan, 1,3-Dimethyl-2,4- und -2,6-diisocyanat-cyclohexan und ihre Gemische. Zur Zeit bevorzugt als Isocyanate werden 1-Methyl-2,4- und 1-Methyl-2,6-diisocyanat-cyclohexan und ihre Gemische. Ebenfalls geeignet und bevorzugt werden Gemische von hydriertem 2,4- und 2-6-Toluylendiisocyanat. Schließlich müssen die Isocyanatgruppen beide axial oder beide äquatorial angeordnet sein, da gefunden wurde, daß die Reaktion nicht vonstatten geht, wenn die eine Gruppe axial und die andere äquatorial ist. Das Verfahren gemäß der Erfindung zur Herstellung der Nylon-1-polymerisate kann unter ausschließlicher Verwendung solcher Diisocyanate, deren Isocyanatgruppen beide axial oder beide äquatorial liegen, als Ausgangsmaterialien oder von Gemischen dieser Stereoisomeren mit anderen Stereoisomeren, insbesondere solchen, in denen eine Isocyanatgruppe axial und eine Isocyanatgruppe äquatorial angeordnet ist, durchgeführt werden. Beim Verfahren gemäß der Erfindung zur Abtrennung von im wesentlichen reinem alkylsubstituiertem 1,3-Diisocyanat-cyclohexan in Form der

cis-Stereoisomeren von den entsprechenden trans-Stereoisomeren werden diese Gemische immer als Ausgangsmaterial verwendet.

Als Katalysatoren eignen sich für das Verfahren gemäß der Erfindung beispielsweise insbesondere organische Salze von zweiwertigem Blei, z.B. Bleilaurat, Bleioleat und Bleinaphthenat, tertiäre Amine, z.B. Dimethylaminoäthanol, Triäthylendiamin, N,N,N',N'-Tetramethyläthylendiamin und N,N-Dibutylharnstoff, Alkalimetallhydroxide, z.B. Natriumhydroxid und Kaliumhydroxid, und Alkalialkoholate, z.B. Natriummethoxid, Kaliummethoxid, Natriumäthoxid oder Kaliumäthoxid.

Im allgemeinen wird die Polymerisation vorzugsweise in Gegenwart eines inerten Lösungsmittels durchgeführt. Beispiele geeigneter Lösungsmittel für diesen Zweck sind Kohlenwasserstoffe, z.B. Xylol, halogenierte aliphatische oder aromatische Kohlenwasserstoffe, z.B. Methylenchlorid, Chloroform, Trichloräthylen, chloriertes Benzol, Ketone, z.B. Aceton, Methyläthylketon und Diäthylketon, Ester, z.B. Äthylacetat, Butylacetat, Glykolmonomethylätheracetat und Glykolmonoäthylätheracetat, und Äther, z.B. Tetrahydrofuran und Dioxan, und Gemische dieser Lösungsmittel. Zur Zeit bevorzugt als Lösungsmittel wird Xylol.

Im allgemeinen werden die Komponenten lediglich gemischt und 5 Minuten bis ca. 96 Stunden auf etwa 50° bis 150°C erhitzt. Der Katalysator wird im allgemeinen in Mengen von 0,001 bis 1 Gew.-%, bezogen auf die Menge des Diisocyanats, verwendet.

Das Produkt der Polymerisationsreaktion kann vom Reaktionsgemisch beispielsweise durch Verdünnen des Gemisches mit einem Nichtlöser, z.B. Heptan, isoliert werden.

Da die Produkte des Verfahrens gemäß der Erfindung quantitativ zur monomeren Form bei etwa 230°C depolymerisieren,

sind sie überaus vorteilhaft als Spalter oder verkappte Isocyanate. Für diesen Zweck können die Polymerisate mit den üblichen Polyhydroxyverbindungen der Polyurethan-Chemie, z.B. Polyesterpolyolen, Polyätherpolyolen oder niedrigmolekularen Polyolen, kombiniert werden. Im allgemeinen werden die Polymerisate mit diesen Polyhydroxyverbindungen in solchen Mengen kombiniert, daß das Molverhältnis zwischen blockierten Isocyanatgruppen und Hydroxylgruppen 0,8:1 bis 1,2:1 beträgt. Diese Kombinationen der Polymerisate mit den Polyhydroxyverbindungen sind besonders vorteilhaft als Bindemittel für Anstriche und Überzüge.

Wie bereits erwähnt, reagieren die als Ausgangsmaterialien eingesetzten trans-Stereoisomeren des alkylsubstituierten 1,3-Diisocyanat-cyclohexans nicht im Verlauf des Verfahrens gemäß der Erfindung. Das Polymerisationsverfahren gemäß der Erfindung eignet sich daher besonders gut für die Abtrennung von reaktionsfähigen cis-Stereoisomeren von nichtreaktionsfähigen trans-Stereoisomeren. Für diesen Zweck genügt es, die linearen heterocyclischen Nylon-1-polymerisate, die unter Verwendung eines vorstehend beschriebenen Stereoisomerengemisches erhalten worden sind, zu waschen und zu zersetzen, beispielsweise durch Erhitzen auf 200 bis 250°C, wobei Anwendung von Vakuum von weniger als 6,7 mbar besonders bevorzugt wird. Diese Zersetzungsreaktion wird vorzugsweise in einer Destillationsapparatur so durchgeführt, daß das reine cis-Stereoisomere als Destillat erhalten wird.

Die Erfindung wird durch die folgenden Beispiele weiter erläutert. In diesen Beispielen beziehen sich alle Mengenangaben in Teilen und Prozentsätzen auf das Gewicht, falls nicht anders angegeben.

## Beispiel 1

Ein Gemisch von 80% 2,4- und 20% 2,6-Toluoldiamin wurde zur Cyclohexylform hydriert. Dies erfolgte durch Schmelzen von

1200 g 80/20 TDA bei 110°C und Aufschlämmen von 50 g Aktivkohle im TDA für etwa 10 Minuten. Das geschmolzene TDA wurde durch ein Bett des Filterhilfsmittels "Celite" auf einem dampfbeheizten Büchnertrichter filtriert. In einem 3,8 l-Autoklaven wurden 1000 g des Filtrats bei 315 bar 4 Stunden hydriert. Der Autkoklav wurde dann gekühlt und entspannt. Das flüssige Produkt wurde dann filtriert.

Die folgenden drei hauptsächlichen Stereoisomeren waren vorhanden (e = äquatorial, a = axial):

| | | | | |
|---|---|---|---|---|
| (x) | 4-e-$NH_2$; | 2-e-$NH_2$ | 49,4% | |
| (y) | 4-a-$NH_2$; | 2-e-$NH_2$ | 17,3% | 78,7% |
| (z) | 6-e-$NH_2$; | 2-e-$NH_2$ | 12,0% | |

Es ist zu bemerken, daß die Isomeren, in denen beide $NH_2$-Gruppen äquatorial oder axial sind (cis-Struktur), insgesamt 61,4% ausmachen. Dieses Gemisch von Aminen wurde in bekannter Weise phosgeniert, wobei das entsprechende Isocyanat (46,6% NCO), das in fast allen Versuchen, die in den folgenden Beispielen beschrieben werden, verwendet wurde, erhalten wurde.

Die Bildung der beanspruchten cyclischen Nylon-1-struktur bei den in den folgenden Beispielen (2 bis 12) beschriebenen Versuchen wurde durch die Infrarot-Analyse bestätigt, die ein Spektrum ergab, das von dem von linearen Nylon-1- oder Isocyanuratstrukturen erhaltenen Spektrum deutlich verschieden war.

## Beispiel 2

300 g des gemäß Beispiel 1 hergestellten Isocyanats und 4,5 g Bleioctoat wurden in einen unter Stickstoff gehaltenen 500 ml-Dreihalskolben gegeben und bei 120 bis 145°C erhitzt. Nach etwa einer Stunde war die Viskosität bis zu dem Punkt gestiegen, an dem 200 g Xylol zugesetzt wurden. An diesem Punkt betrug der NCO-Gehalt der Lösung 11,4%. Das Erhitzen wurde weitere 4 Stunden bei 110 bis 125°C fortgesetzt,

worauf der NCO-Gehalt noch 11,4% betrug, ein Zeichen, daß die gewünschte Reaktion innerhalb der ersten Stunde stattgefunden hatte. Der Monomerengehalt dieser Lösung wurde mit 25% festgestellt, was an sich 0,25 x 46,6% oder 11,6% des nicht umgesetzten NCO ausmachen würde, ein Zeichen, daß das Polymerisat ein ziemlich hohes Molekulargewicht und einen sehr niedrigen Gehalt an endständigen NCO-Gruppen haben muß. Der Gehalt von 25% Monomerem in der Lösung entspricht 41,6% nicht umgesetztem Monomerem, bezogen auf das ursprüngliche eingesetzte Isocyanat. Dies zeigte, daß 41,6% der im Isocyanat vorhandenen Isomeren unter diesen Bedingungen nicht polymerisiert.

Die Xylollösung wurde mit weiteren 500 ml Xylol verdünnt, worauf 1500 ml Heptan sehr langsam unter Rühren zugesetzt wurden, um das Polymerisat auszufällen. Das Polymerisat wurde abfiltriert, mit 5000 ml Heptan gewaschen und im Vakuum-Wärmeschrank bei 100°C getrocknet (A). Das Filtrat und die Waschflüssigkeit wurden vereinigt, eingeengt und destilliert, wobei ein Destillat (B) und ein Destillationsrückstand (C) erhalten wurden:

| | | | | |
|---|---|---|---|---|
| | 2-A | 173,5 g | 57,8% | (Polymerisat) |
| | 2-B | 94,0 g | 31,3% | (Monomeres) |
| | 2-C | 15,0 g | 5,0% | |
| Insgesamt gewonnen | | 282,5 g | 94,1% | |

Die anschließende Untersuchung des Polymerisats 2-A hatte die folgenden Ergebnisse:

| | | |
|---|---|---|
| Schmelzpunkt (durch Differentialthermoanalyse - DTA) | | 253°C |
| Zersetzungstemperatur (durch DTA) | etwa | 290°C |
| Molekulargewicht | | 5300 (NCO-Gehalt mit endständigen NCO-Gruppen 1,6%) |
| Tatsächlich gefundenes NCO | | 0,4% |
| Monomerengehalt | | 0,1% |

Das Polymerisat 2-A war in Methylenchlorid, Xylol und Diäthylbenzol leicht löslich (33%ige Lösung), jedoch in Triäthylbenzol, Heptan oder Hexan im wesentlichen unlöslich.

## Beispiel 3

5 g des Polymerisats 2-A wurden in eine Mikrodestillationsapparatur gegeben und auf eine Blasentemperatur von etwa 230°C unter einem Druck von 2,66 mbar erhitzt. Das Produkt wurde zersetzt und ging bei einer Kopftemperatur von etwa 132°C über. Dies wurde noch viermal wiederholt, und die fünf Destillate (3-A) wurden vereinigt. Die Untersuchung des Destillats ergab einen NCO-Gehalt von 46,0%. Das IR-Spektrum war dem von hydriertem TDI sehr ähnlich, ein Zeichen, daß

1) das Polymerisat durch Vakuumdestillation zum ursprünglichen Monomeren depolymerisiert und
2) dieses Verfahren angewendet werden konnte, um die reaktionsfähigen Stereoisomeren (ee und aa), Probe 2-A, von den nicht-reaktionsfähigen Stereoisomeren (e, a und a,e), Probe 2-B, zu trennen.

## Beispiel 4

Da das im wesentlichen NCO-freie Polymerisat zur Rückbildung des Monomeren bei erhöhter Temperatur fähig war, müßte es möglich sein, das Polymerisat als "getarntes" Isocyanat oder Isocyanat-"Spalter" zu verwenden.

3,4 g eines verzweigten flüssigen Polyesters, der aus 1,3-Butandiol, Trimethylolpropan, Adipinsäure und Maleinsäure so hergestellt worden war, daß er eine OH-Zahl von 165 hatte (Handelsprodukt "Multron R-12", Hersteller Mobay Chemical Corporation) wurden mit 1,0 g des Polymerisats 2-A und 4,0 g Xylol gemischt. Die erhaltene Lösung wurde auf eine Aluminiumplatte gegossen. Das Lösungsmittel wurde abgedampft und der Lackfilm unter verschiedenen Bedingungen eingebrannt.

15 Minuten bei 130°C
25 Minuten bei 150°C } keine wesentlichen Veränderungen
15 Minuten bei 175°C
30 Minuten bei 200°C: Ein harter, zäher Film wurde gebildet.

Dies veranschaulicht, daß das Polymerisat 2-A nur bei erhöhten Temperaturen mit OH-Gruppen enthaltenden Materialien zu reagieren vermag.

Beispiel 5

1,76 g eines Diamins $H_2N-C_2H_4-O-C_2H_4-O-C_2H_4-NH_2$ und 2,0 g des Polymerisats 2-A werden in 8,0 g Xylol gelöst und auf eine Aluminiumplatte gegossen. Nach dem Abdampfen des Xylols liegt der Film als viskose Schicht vor. Einbrennen für 15 Minuten bei 175°C verursacht Nachdunkeln und einen Viskositätsanstieg. Durch weiteres Einbrennen für 15 Minuten bei 200°C wird der flüssige Film in einen dunklen, klebrigen thermoplastischen Feststoff bei 200°C umgewandelt, der bei Abkühlung auf Raumtemperatur zu einem harten, zähen Film wird.

Beispiel 6

Eine Probe von hydriertem TDI (46,4% NCO) wurde aus hydriertem Amin hergestellt. In einem Kolben wurden 100 g des Isocyanats und 0,7 g einer 50%igen Lösung von Bleioctoat in Xylol bei 125 bis 140°C erhitzt. Innerhalb einer Stunde fand ein deutlicher Viskositätsanstieg statt, so daß 66,7 g Xylol zugesetzt wurden. Der NCO-Gehalt dieser Lösung betrug 11,1% entsprechend 18,5% NCO auf lösungsmittelfreier Basis, ein Zeichen, daß 18,5 : 46,4 oder 39,8% des NCO nicht reaktionsfähig waren (im Vergleich zu 41,6% im Falle von Beispiel 2).

Beispiel 7

Der in Beispiel 6 beschriebene Versuch wurde wiederholt mit dem Unterschied, daß 0,2 g Bleiacetat verwendet wurden.

Das Xylol wurde zugesetzt, nachdem 3 Stunden bei 115 bis 135°C erhitzt worden war. Der NCO-Gehalt der erhaltenen Lösung betrug 11,6% (im Vergleich zu 11,1% im Falle von Beispiel 6).

Beispiel 8

Eine TDA-Probe wurde hydriert und dann phosgeniert, wobei ein Diisocyanat mit einem NCO-Gehalt von 45,6% erhalten wurde. In einen Dreihalskolben wurden 50 g des Diisocyanats mit 0,5 g Bleioctoat gegeben und bei 110 bis 120°C erhitzt. Nach 30 Minuten stieg die Viskosität; 50 g Xylol wurden zugesetzt. Der NCO-Gehalt der erhaltenen Lösung betrug 13,0%. Das Erhitzen wurde weitere 3 Stunden forgesetzt, worauf der NCO-Gehalt 10,1% betrug. Auf xylolfreier Basis entspricht dies 20,2% NCO, ein Zeichen, daß 20,2 : 45,6 oder 44,3% des ursprünglichen NCO nicht-umgesetzt blieben.

Die Lösung wurde mit 100 ml Xylol verdünnt, worauf 2000 ml Hexan langsam unter Rühren zugesetzt wurden, wobei das Polymerisat ausgefällt wurde. Das Polymere wurde abfiltriert, gewaschen und getrocknet. Die Ausbeute betrug 26 g entsprechend 52%, bezogen auf eingesetztes ursprüngliches Isocyanat.

Beispiel 9

100 g des gemäß Beispiel 1 hergestellten Isocyanats und 0,1 g $NaOCH_3$ wurden in einen Dreihalskolben gegeben und bei 110-145°C erhitzt. Innerhalb von 30 Minuten stieg die Viskosität, worauf 67 g Xylol zugesetzt wurden. Die erhaltene Lösung hatte einen NCO-Gehalt von 11,4%. Das Infrarotspektrum zeigte die gleiche Struktur von cyclischem Nylon-1, wie sie im Falle der Beispiele 2, 6, 7 und 8 erhalten wurde.

Beispiel 10

Je 5 g verschiedener Isocyanate wurden zusammen mit 0,07 g Bleioctoat in trockene 16 ml-Phiolen gegeben, die zugeschmolzen und im Wärmeschrank 4 Stunden bei 75°C gehalten

wurden.

| Verwendetes Isocyanat | Aussehen nach 4 Std. bei 75°C | IR-Spektren |
|---|---|---|
| Beispiel 1 | sehr viskos | Nylon-1-Struktur |
| Beispiel 2-B | keine Veränderung | Isocyanat; keine Reaktion |
| 1,6-Hexandiisocyanat | niedrige Viskosität | etwas Isocyanurat |

Dies zeigt, daß nur gewisse Isomere, die im Falle von Beispiel 1 vorhanden sind, die besondere Struktur von cyclischem Nylon-1 auszubilden vermögen. Das im Falle von Beispiel 2-B erhaltene nicht reaktionsfähige Destillat war ebenso wie reines Cyclohexylisocyanat noch nicht reaktionsfähig. Ein typisches Alkylisocyanat bildet übliches Isocyanurat und nicht die Nylon-1-Struktur.

Beispiel 11

1000 g des gemäß Beispiel 1 hergestellten Isocyanats und 5 g Dimethylaminoäthanol wurden in einen Dreihalskolben gegeben und 2 Stunden bei 125°C erhitzt.Am Ende des Tages wurde das Material über Nacht bei Raumtemperatur stehen gelassen. Am nächsten Morgen wurden weitere 5 g Katalysator zugesetzt, worauf das Erhitzen wieder aufgenommen wurde. Nach weiteren 2 Stunden wurde festgestellt, daß der Inhalt dunkelfarbig und viskos war. Der NCO-Gehalt betrug 24,4%, ein Zeichen, daß nur 46,7 : 24,4 oder 52% der ursprünglichen NCO-Gruppen nicht-umgesetzt geblieben waren.

Beispiel 12

200 g hydriertes 2,4-Toluylendiisocyanat wurden in 200 g Xylol gelöst und in Gegenwart von 0,15 g eines tertiären Amins "DABCO TMR-2" (Hersteller Air Products) umgesetzt. Nach 2-stündigem Rühren bei Raumtemperatur war keine Reaktion wahrnehmbar. Das Gemisch wurde dann etwa 5 Stunden von etwa 70 auf 100°C erhitzt, worauf der NCO-Gehalt einer Probe ermittelt wurde. Der NCO-Gehalt betrug 44,5%. Nach

Zusatz von etwa 0,3 g des tertiären Amins DABCO TMR-2 bei etwa 80°C wurde das Gemisch über Nacht der Abkühlung auf Raumtemperatur überlassen. Am Morgen wurde eine Probe genommen, deren NCO-Gehalt 32,64% betrug. Das Gemisch wurde dann 6 Stunden bei etwa 77 bis 96°C behandelt. Die letzte Probe nach dieser Zeit hatte einen NCO-Gehalt von 30,55%.

Patentansprüche:

1. Verfahren zur Herstellung von linearen heterocyclischen Nylon-1-polymerisaten durch Polymerisation von cycloaliphatischen Diisocyanaten in Gegenwart von Polymerisationskatalysatoren, dadurch gekennzeichnet, daß man
   a) alkylsubstituierte 1,3-Diisocyanat-cyclohexane, deren Isocyanatgruppen beide axial oder äquatorial angeordnet sind, gegebenenfalls in Mischung mit anderen Stereoisomeren als cycloaliphatische Diisocyanate verwendet und
   b) Verbindungen aus der aus organischen Salzen von zweiwertigem Blei, tertiären Aminen, Alkalihydroxiden und Alkalialkoholaten bestehenden Gruppe als Katalysatoren verwendet.

2. Verwendung der Produkte des Verfahrens nach Anspruch 1 als verkappte Diisocyanate, die Ausgangsmaterialien für die Herstellung von Polyurethan-Kunststoffen darstellen.

3. Verfahren zur Abtrennung von im wesentlichen reinen alkylsubstituierten 1,3-Diisocyanat-cyclohexan-cis-stereoisomeren von alkylsubstituierten 1,3-Diisocyanat-cyclohexan-trans-stereoisomeren, dadurch gekennzeichnet, daß man
   a) ein Gemisch, das beide Stereoisomeren enthält, in Gegenwart von Verbindungen aus der aus organischen Salzen von zweiwertigem Blei, tertiären Aminen, Alkalimetallhydroxiden und Alkalialkoholaten bestehenden Gruppe auf eine Temperatur von etwa 50° bis 150°C erhitzt,

   b) das durch diese Reaktion gebildete lineare cyclische Nylon-1-polymerisat vom Reaktionsgemisch isoliert und

   c) das Polymerisat unter Destillationsbedingungen zersetzt und hierdurch ein Destillat bildet, das ein im

wesentlichen reines Monomeres enthält, das aus alkylsubstituiertem 1,3-Diisocyanat-cyclohexan in Form der cis-Stereoisomeren besteht.

0014365

Europäisches Patentamt

# EUROPÄISCHER RECHERCHENBERICHT

Nummer der Anmeldung

EP 80 10 0270

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| DA | CHEMICAL ABSTRACTS, Band 64, Nr. 9, 25. April 1966, Zusammenfassung Nr. 12563e, Columbus, Ohio, US, G.C. CORFIELD et al.: "Preparation and cyclopolymerization of cis-1,3-di(isocyanato)-cyclohexane" & Chemical Communications, 1966, (4) 85-86 * Zusammenfassung * | 1 | C 08 G 18/02<br>18/79<br>C 07 C 119/045<br>C 08 G 73/06 |
| | -- | | RECHERCHIERTE SACHGEBIETE (Int. Cl. 3) |
| DA | US - A - 3 163 624 (W.B. BLACK et al.) * Spalte 4; Ansprüche 1,5; Spalte 1, Zeilen 52-70; Spalte 2, Zeilen 6-15 * | 1 | C 08 G 18/02<br>18/79<br>73/06<br>C 07 C 119/045<br>C 08 G 18/00 |
| | -- | | |
| A | US - A - 3 644 459 (J.M. CROSS) * Spalte 6; Anspruch 1 * | 1 | |
| | --- | | |
| A | US - A - 3 351 650 (J.M. CROSS et al.) * Spalte 12; Ansprüche 1,2 * | 1 | |
| | ---- | | |

KATEGORIE DER GENANNTEN DOKUMENTE

- X: von besonderer Bedeutung
- A: technologischer Hintergrund
- O: nichtschriftliche Offenbarung
- P: Zwischenliteratur
- T: der Erfindung zugrunde liegende Theorien oder Grundsätze
- E: kollidierende Anmeldung
- D: in der Anmeldung angeführtes Dokument
- L: aus andern Gründen angeführtes Dokument
- &: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 09-05-1980 | V. PUYMBROECK |